# EUROPEAN PATENT APPLICATION

(11) **EP 4 575 988 A1**
(43) Date of publication of application: **25.06.2025**
(21) Application number: 23219490.2
(22) Date of filing: 21.12.2023
(51) Int. Cl.: G06T 7/11, G06T 7/35, G06T 19/00

(54) **COMPUTER-IMPLEMENTED METHOD FOR THE GENERATION OF A COMBINED REPRESENTATION OF A 3D IMAGE OF AN ORGAN AND A 3D ANATOMICAL MODEL OF SAID ORGAN**

(71) Applicant: Inheart, 33600 Pessac (FR)
(72) Inventor: KABONGO, Luis, 33600 PESSAC (FR); PEYRAT, Jean-Marc, 33600 PESSAC (FR); CEDINILK, Nicolas, 33600 PESSAC (FR)
(74) Representative: Aquinov

(57) **Abstract**

The invention concerns a computer-implemented method for generating a combined representation of a 3D image and a 3D anatomical model of an organ, comprising: (501, S01', S02', S03') receiving a 3D image (3D_CT₁) and a 3D model (IH₂) segmented in sub-parts (SPᵢ) representing anatomical parts; (502, 503, S04) generating, from the image, a mapping of points (IH₁) segmented in regions of interest (RoIᵢ) whose points (Pᵢ) are associated with local characteristic values (Tᵢ, Cᵢ); (S1) Determining an intrinsic coordinate system (ICS_{LV}) of a sub-part (SP₁) of the 3D model (IH₂) depending on the anatomic part to which it corresponds ; (S2) Computing coordinates (ϕᵢ, zᵢ, dᵢ) of points (Pᵢ) of the region of interest in the intrinsic coordinate system; (S3) Generating a combined 3D model (IH₃) wherein a sub-part (SP₁) is labelled with values (Tᵢ, Cᵢ) associated to points (Pᵢ) identified from their coordinates in the intrinsic coordinate system.

## Description

The present invention relates to the field of computer assisted medical imaging. More particularly, the invention relates to a computer-implemented method for the generation of a combined representation of a 3D image of an organ and a 3D anatomical model of said organ.

It is known to combine 3D images of the heart of a patient to construct a 3D model of this heart. This 3D model can be then provided to a cardiologist to achieve a diagnosis of a heart disorder, to prepare a cardiac intervention, or to monitor the health of the patient.

These heart images can be acquired from different modalities, such as a computed tomography (CT)-scan, and a magnetic resonance imaging (MRI)-scan, or from the same modality but at a different timing, namely at different "injection phases" in which the contrast agent is in different cavities. One of these images, as the "arterial CT" image, is used to segment the heart anatomy since it has the highest quality and/or the localization of the contrast agent is optimal for the segmentation. The other image is used to extract a different information, as the localization of the infarct scar within the myocardial wall, that will then be represented on the anatomical segmentation provided by the first image.

While these images are representing a same heart, a simple rigid registration is not enough to ensure that the information extracted from the feature image is within the bounds of the myocardial wall in the anatomical image. However, there is a need to transpose the information associated to each point from the feature image to the anatomical segmentation, so the resulting 3D model presents information correctly located on the appropriate anatomy part or region.

A same issue arises for a patient follow-up, when comparing 3D images of his heart acquired at different timings. Even when a same modality is used to acquire these 3D images, the heart geometry can evolve from one acquisition to the next, which makes the registration complex. The same issue also arises when it is needed to compare the heart of a patient to the heart of another patient, or to a heart standard model, as an atlas or a statistical shape model of a heart (SSM).

This issue is not limited to the cardiology field but also arises in other medical fields, as in neurology or nephrology.

Considering the above, there is therefore a need for a method which makes possible to combine 3D images or model acquired from different modalities or at different timings, without requiring a complex image registration.

The object of the present invention is to answer to this need.

For this purpose, the subject of the invention is a computer-implemented method for the generation of a combined representation of a 3D image of an organ and a 3D anatomical model of said organ, the method comprising:
a. Step of receiving at least a first 3D image of a patient's organ and at least a first 3D anatomical model of said organ, wherein said first 3D anatomical model is segmented in sub-parts each representing at least a portion of a predetermined anatomical part of said organ;
b. Generating, from said first 3D image, a mapping of points representing said organ and segmenting, from said mapping of points, a region of interest corresponding to a first predetermined anatomic part, wherein each point of said region of interest is associated with at least a value of at least one parameter and/or a classification indicating a local characteristic of said organ at or around said point position;
c. Determining an intrinsic coordinate system of at least a first sub-part of said first 3D anatomical model of said organ which corresponds to said first predetermined anatomic part and which depends on said first anatomic part;
d. Computing, at least for each point of said region of interest of said mapping of points, coordinates of this point in said intrinsic coordinate system;
e. Generating, from said first 3D image and from said first 3D anatomical model, a combined 3D model of said organ, wherein at least a sub-part of said combined 3D model of said organ, corresponding to said first predetermined anatomic part, is labelled with the values and/or the classifications associated to the points of said region of interest, which are identified from their coordinates in said intrinsic coordinate system.

According to the invention, a mapping of points of an organ, such as a tissue of a patient's heart, is computed from a 3D image of said organ. This 3D representation is associated to local features which are representative, directly, or indirectly and partly, or fully, of features of the organ, such as the presence or the absence of arrythmias in case of a heart. These local features might be physiological, geometrical, electrical and/or structural characteristic, resulting directly from the points intensities and/or contrast and/or from computing on the mapping of points, and/or from another data acquisition technique.

An example of local characteristic might be the thickness of the tissue, for instance determined with measuring the distance separating closest points of inner and outer surface of a wall of the organ. In the case of a wall of the heart, as the myocardium, the thickness of the wall may help to identify areas responsible of arrythmias, such as scar, chamber's wall segment particularly thin or morphological isthmuses, i.e., areas having a thickness lower than the thickness of adjacent zones. In particular, such isthmuses might create electrical pathway problems on the heart conduction system, such as re-entry circuits.

An example of classification might be the cellular composition of the tissue. For example, in the case of some cardiac diseases, part of the muscular tissue is replaced by adipocytes or by calcified structures; such structural changes tend to weaken the thickness of the heart as well and might be responsible of arrhythmias.

At the same time, an anatomical 3D model of the organ is supplied. Said 3D model might be computed from a 3D image acquired with the same imaging method than the first 3D image, but a different time, or with a different imaging method. It might be a 3D model of the same patient's organ as pictured in the first 3D image, or a 3D model of another patient's organ, or a 3D standard model of the organ.

Considering the above, the 3D model carries anatomical information while the first 3D image carries another kind of information, such as the location of an infarct scar in the case of a heart. A region of interest, containing this information, can then be segmented from the first 3D image. The combination of the information carried by this region of interest and the 3D model might thus be helpful, for instance to precisely locate the infarct scar on the heart.

To ensure an accurate combination without requiring to a complex registration, the method according to the invention provides a step of computing an intrinsic coordinate system of a sub-part of the 3D model which represents an anatomical part corresponding to the segmented region of interest. This intrinsic coordinate system can be defined by an origin, three axes, and coordinate types, coordinate numbers and coordinate scales along each axis, wherein at least one of these parameters depends on the anatomical part to which it refers. For instance, the intrinsic coordinate system might be spherical, cylindrical, cartesian or an hybrid combination of the previous. The axes might be straight or curved. The coordinates might be a couple or a triple of distances and/or angles. The coordinates scales might be linear or nonlinear, normalized or unnormalized, continuous or formed by separated intervals. For instance, said intrinsic coordinate system can depends on the geometrical shape and dimensions of the anatomical part (i.e. cylindrical, spherical, ellipsoidal, planar), on its orientation, on its relative position within the organ, on the shape, location, dimensions and number of anatomical sub-parts of the anatomical part, and on type and location of anatomic landmarks of the anatomical part.

With said intrinsic coordinate system, two representations of the anatomical part can be compared. In other words, each point of the region of interest can be given coordinates in this intrinsic coordinate system and can thus be represented in the 3D model frame. Following the computing of these coordinates, a combined 3D model can therefore be built from the 3D image and the 3D anatomical model, with the local features extracted from the 3D image being precisely located on the corresponding anatomic part segmented from the 3D anatomical model. For instance, each vertex of the 3D anatomical model can be labelled with the values and/or the classifications associated to the points of said region of interest with the same coordinates in the intrinsic coordinate system. These values and/or classifications are thus transposed to the 3D anatomical model to form the combined 3D model. As another example, the region of interest of the mapping of points can be transposed or interpolated to the intrinsic coordinate system, to create a mesh which is then added to the 3D anatomical model to form the combined system.

In the context of the present specification, unless expressly provided otherwise, a "computer" may refer, but is not limited to, a desktop computer, a laptop computer, a tablet computer, a piece of testing equipment, a network appliance, a controller, a digital signal processor, a computational engine within an appliance, a consumer-electronic device, a portable computing device, and/or another electronic device, and/or any combination thereof appropriate to the relevant task at hand. Moreover, the method steps might be all executed on a same device. As a variant, the method steps might be executed on several devices, connected by wires or by a wireless connection.

In the context of the present specification, unless expressly provided otherwise, a "3D image of an organ" is a three-dimensional representation of an organ created using imaging methods, or modalities, such as a computed tomography(CT)-scan, a spectral computed tomography(SCT)-scan, a positron emission tomography(PET)-scan, a single photon emission computed tomography(SPECT)-scan, a photon-counting computed tomography(PCCT)-scan or a magnetic resonance imaging(MRI)-scan. Said 3D image can also be provided from an electro-anatomical study acquired during an intracardiac catheter intervention. A 3D image might be stored as a 3D matrix of voxels or as a collection of vertices and edges and/or faces.

For instance, the first 3D image can be acquired through a tomography technique, as a CT-scan, based on the measurement of X-ray absorption by the tissues of an organ. Tomography provides a plurality of 2D images each representing a slice of the organ, which are then combined to reconstruct the 3D image of the observed organ.

In the context of the present specification, unless expressly provided otherwise, an "anatomical part of an organ" is a specific structural component or segment within an organ, which is characterized by distinct functions, tissues and or regions. For instance, a heart is composed of different anatomical parts, such as the heart chambers (left and right atria and left and right ventricles), the septum, the valves (tricuspid, pulmonary, mitral, and aortic), and blood vessels (coronary arteries and veins).

In the context of the present specification, unless expressly provided otherwise, a "mapping of points of an organ" is a set of points digitally representing this organ, said points can be encoded computationally by sequences or lists of numerical values, in particular sequences of at least one numerical value representing the coordinates of said points in a particular reference. The coordinates can be specified in any type of chart, for instance in cartesian, spherical cylindrical coordinates or any other type of geometrical chart in one, two or three spatial dimensions. A mapping of points might be a 2D mapping of points or a 3D mapping of points.

A 3D mapping of points might be a "3D model of an organ", namely one or more structured mesh, each comprising a plurality of vertices connected with each other to define a plurality of faces and/or volumes which approximate internal and/or external surfaces and/or volumes of all or part of the organ. A 3D model might be a triangle mesh or a quadrilateral mesh, or more generally a polygonal mesh, which comprises a plurality of vertices, with edges connecting pairs of vertices and/or polygonal faces connecting a closed set of vertices. As a variant, a 3D model might be a tetrahedral mesh or a hexahedral mesh or a prism mesh, or more generally a volume mesh, which comprises a plurality of vertices, with polyhedrons connecting a closed set of polygons defined by closed set of vertices. Preferably, each vertex and/or edge and/or polygon and/or polyhedron might be labelled as being a part of a specific anatomical part of the organ. A 3D model might be stored as a list of vertices each associated with spatial coordinates and with a set of connections to other vertices, or as a list of vertices associated with spatial coordinates and a list of polygons or faces each defined by a subset of vertices contained in said list of vertices, being understood that any other suitable method of storage might be used in the context of the present specification.

A 3D mapping of points might be an unstructured set of points, namely a point cloud, where each point might be or not connected to another point of the point cloud.

In the context of the present specification, unless expressly provided otherwise, "a parameter indicating a local characteristic of an organ at a point position or around a point position" might be an electrical, a physiological, a physical or a geometrical feature of an area of the organ whose location corresponds to said position. In the context of a heart tissue as the myocardium, an electrical feature might be an activation time, an electric potential, or a conduction velocity. A physiological feature might be a tissue density. A physical or a geometrical feature might be a tissue thickness, such as a myocardial thickness. It is understood that any other suitable local feature of the heart, which is representative, directly, or indirectly and partly, or fully, of the presence or the absence of arrythmias, might be used in the context of the present specification.

In the context of the present specification, unless expressly provided otherwise, a "classification indicating a local characteristic of an organ at a point position or around a point position" might be a class indicating the type of cells composing the organ at or around a location corresponding said position and/or a class indicating the major type of cells composing the organ at or around a location corresponding said position and/or a class indicating the proportion of the types of cells composing the organ at or around a location corresponding said position. In the context of a heart tissue as the myocardium, said type of tissue might be a muscle tissue, a fat tissue, or a calcified tissue. As a variant, a "classification indicating a local characteristic of an organ at a point position or around a point position" might be a label previously attributed to a point and indicated whether a part of the organ at or around said point position belongs to a cardiomyopathy scar or a myocardial fibrosis.

In the context of the present specification, unless expressly provided otherwise, a "3D anatomical model of an organ" is a 3D model of said organ composed of distinct sub-parts each representing, partly or fully, a specific anatomical part of said organ. Each sub-part can be formed by one or more meshes of said 3D model. In an example, wherein the organ is a heart, said 3D anatomical model of the heart might be a 3D model in which each atrium, each ventricle, each valve, and each blood vessel is represented with one or more dedicated meshes.

Said first 3D anatomical model might be a 3D model of said patient's organ or a 3D model of a similar organ of another patient or a standard 3D model of said organ.

According to one embodiment, said first 3D anatomical model might be issued or computed from a second 3D image of the organ, which might be an image of the same patient's organ acquired according to a second imaging method or according to the same imaging method but at a different time.

According to one embodiment, the method comprises a preliminary step of acquiring a second 3D image and/or recording a 3D image of a patient's organ, the 3D anatomical model being computed from said 3D image. The 3D image may be acquired directly from an image acquisition device such as a MRI-scan. Alternatively, the 3D image may be obtained from a recording medium on which it is stored, such as a local memory or a distant database, the 3D image having been acquired beforehand the method.

The method according to the invention can then comprise a 3D modeling step of the second 3D image of the organ to generate the 3D model. The 3D modelling step comprises a modeling step of at least one layer, or one wall of the organ shown in the 3D image, such as an inner face and an outer face of the layer of the organ. Said 3D model might be formed by one or more mesh, especially a polygonal or a polyhedron mesh, of said layer, especially of said inner and outer faces.

The method can also comprise a segmentation step, wherein each anatomical part of the organ is segmented within the 3D model. The segmentation step can be operated with any suitable known segmentation method.

According to an embodiment, said combined 3D model generation step comprises the association, to each vertex of the first sub-part of the first 3D anatomical model, of the value and/or the classification associated with a point of said region of interest whose coordinates in said intrinsic coordinate system correspond to the coordinates of said vertex in said intrinsic coordinate system, said first 3D model associated to said values forming said combined 3D model. In this embodiment, the values and/or the classifications of the points of the region of interest are transposed to the first 3D anatomical model.

A correspondence between the coordinates of a vertex of the first 3D model and a point of the region of interest might be estimated with any suitable metric, as a distance metric. For instance, the point whose coordinates are the closest to the coordinates of a vertex, according to an Euclidean distance, might be considered as the corresponding point of this vertex.

As a non-limitative example, each vertex of the first sub-part might be also labelled with the corresponding point's coordinates in said intrinsic coordinate system and with an information indicating this intrinsic coordinate system.

According to a second embodiment said combined 3D model generation step comprises the generation, from said points of said region of interest, of a second 3D model representing said first predetermined anatomic part, said first and second 3D models being combined to generate said combined 3D model. In this embodiment, the region of interest is projected on the first 3D anatomical model, for instance through an interpolation of the coordinates of its points in the intrinsic coordinate system.

As a non-limitative example, a mesh can be created with interpolating, i.e. with a linear interpolation or a proximal interpolation, the coordinates of the points of the region of interest in the intrinsic coordinate system. Said mesh can then be added to the first 3D anatomical model to form the combined 3D model.

According to an embodiment, said segmentation step comprises the segmentation of said mapping of points into different regions of interest, each corresponding to at least a portion of a predetermined anatomical part of said organ; the method comprising, for each sub-part of said first 3D anatomical model of said organ to which corresponds one of said portions, a step of determining an intrinsic coordinate system of said sub-part which depends on said corresponding portion. Therefore, each anatomical part of said organ is provided with a dedicated intrinsic coordinate system, which depends on appropriate features of this anatomical part. Combination of information from the 3D image and from the anatomical 3D model is thus simplified compared to a classical registration method, even when the information is distributed on different anatomical parts.

Advantageously, at least one sub-part of the first 3D anatomical model representing an anatomical part of the organ is segmented in predetermined elementary parts. In this case, for each elementary part of said sub-part, an intrinsic coordinate system of said sub-part might be determined, depending on said elementary part. It is thus possible to address a complex geometry of an anatomical part, which makes a registration complex, with a combination of simple geometries.

As an example, an intrinsic coordinate system of a sub-part might depend on joining areas and/or common areas of this sub-part with another sub-part of said first 3D anatomical model. For instance, an intrinsic coordinate system of a left ventricle of a heart might depend on the septum dividing the heart into the left and right ventricles.

According to the invention, a region of interest corresponding to a predetermined anatomical part might be segmented from said mapping of points, with any suitable method.

Said region of interest might be manually identified by a cardiologist and then automatically segmented with one or more computer-implemented method. As a variant, said region of interest might be automatically identified and segmented with one or more computer-implemented method.

In a non-limitative example, said computer-implemented method to identify and/or segment a region of interest corresponding to a predetermined anatomical part might be any of the following:
a. a region growing method in which a region is grown in the mapping of points, from one or more seed points, until the region reaches a growing stop condition depending on said anatomical part;
b. an edge detection method in which outlines of the anatomical part are detected in the 3D image and/or in the mapping of points;
c. a model-based method, as a statistical shape model, an active appearance model, an atlas-based model, in which a model of the anatomical part and/or of the organ is deformed to fit, partly or fully, the mapping of points.

Said computer-implemented method might implement one or more image processing algorithms and/or one or more machine learning algorithms, as a pixel/voxel clustering algorithm or a convolution neural network executed on the 3D image and/or the mapping of points.

Said computer-implemented method might be based on a recognition of predetermined anatomical landmarks of the anatomical part and/or on a predetermined shape or geometry of said anatomic part. For instance, a region of interest corresponding to a left ventricle can be segmented from a mapping of points representing a heart with firstly detecting the mitral valve and the apex. The location of these features might be then introduced as an anatomical constraint in one of the above-mentioned segmentation methods.

According to an embodiment, said intrinsic coordinate system is determined from the geometrical shape of said first anatomic part and/or from the position of anatomic landmarks and/or anatomic sub-parts of said first anatomic part. In other words, at least one of the origin, the axes, the coordinate types, the coordinate numbers, and the coordinate scales along each axis of said intrinsic coordinate system might be determined from the geometrical shape of said first anatomic part and/or from the position of anatomic landmarks and/or anatomic sub-parts of said first anatomic part.

Alternatively, or cumulatively, said intrinsic coordinate system is determined from the position of anatomic landmarks and/or anatomic sub-parts of another predetermined anatomic part of said organ. In other words, at least one of the origin, the axes, the coordinate types, the coordinate numbers, and the coordinate scales along each axis of said intrinsic coordinate system might be determined from the position of anatomic landmarks and/or anatomic sub-parts of another predetermined anatomic part of said organ.

According to an embodiment, said intrinsic coordinate system determination step comprises the determination a computable 3D geometrical shape which minimizes a distance metric with said first sub-part of said first 3D anatomical model, said intrinsic coordinate system being based on said 3D geometrical shape.

In this embodiment, said computable 3D geometrical shape might be defined by one or more equations, as cartesian equations or parametric equations, with which vertices of said first sub-part can be provided with coordinates which solve said equations. As non-limitative examples, said computable 3D geometrical shape might be a sphere, a cylinder, an ellipsoid, a paraboloid, a hyperboloid, or a cone. Characteristics of this computable 3D geometrical shape, as its center and its axes, then define the intrinsic coordinate system of said sub-part.

Advantageously, in said computable 3D geometrical shape determination step, characteristics of said computable 3D geometrical shape are estimated at least from said geometrical shape of said first sub-part and/or from said positions of anatomic landmarks of said first sub-part or of another predetermined anatomic part of said organ.

Advantageously again, said coordinates representing a vertex of said first sub-part in said intrinsic coordinate system might be defined on a regular 3D grid of said intrinsic coordinate system, which defines a coordinate scale for each axis of said intrinsic coordinate system. Said coordinate scale might be a scalar, continuous and linear scale, meaning that an elementary increase of a coordinate along an axis on said grid always corresponds to a same elementary spatial shift in the axis direction.

As a variant, said coordinate scale might be nonlinear, meaning that an elementary increase of a coordinate along an axis on said grid corresponds to an elementary spatial shift in the axis direction, whose value depending on the position of said coordinate on the grid. Such nonlinear coordinate scale might be helpful to increase the resolution of the intrinsic coordinate scale on a specific area of said anatomical part. The coordinate scale might be homogeneously nonlinear along the axis or nonlinear only on an interval along the axis or distinctly nonlinear on two or more intervals along the axis.

As another variant, said coordinate scale might be discontinuous, meaning that an excluded interval of coordinates along an axis cannot be attributed to any vertex of said first-part, while intervals of coordinates preceding and following said excluded interval along the axis are attributed to vertices of said first part. Such discontinuous coordinate scale can thus help, further to the indicate the spatial position of a vertex, to identify directly a part, as a wall, of the anatomical part, on which said vertex is located.

As another variant, said coordinate scale might be normalized, for instance on an interval bounded by the values "0" and "1". Such normalized coordinate scale can thus help to identify a relative location of a vertex regarding anatomical landmarks or part of said anatomical part.

In a first embodiment wherein said first anatomic part is a heart ventricle tissue, said 3D geometrical shape is all or part of an ellipsoid, whose major axis encompasses both a vertex of the first sub-part corresponding to the apex of said ventricle and a vertex of the first sub-part corresponding to a center of a valve or a flow tract of said ventricle, said axis defining an axis of the intrinsic coordinate system. According to this example, coordinates of each point of said region of interest are computed from the coordinates, in said intrinsic coordinate system, of the closest point of the ellipsoid.

For instance:
a. a barycenter of vertices of the first sub-part might define a center of the ellipsoid,
b. an axis which encompasses both a vertex of the first sub-part corresponding to the apex of said ventricle and a vertex of the first sub-part corresponding to a center of the mitral valve of said ventricle might define a major axis of the ellipsoid;
c. and an axis which encompasses both the center of the ellipsoid and a barycenter of vertices of a second sub-part representing the right ventricle might define a minor axis of the ellipsoid.

Thus, the center, the major axis and the minor axis of the ellipsoid define respectively the origin and two axes of the intrinsic coordinate system, the third axis being determined as being orthogonal to these axes. The ellipsoid semi-axes lengths might be then determined with minimizing a distance metric of the ellipsoid surface with the vertices of the first sub-part.

In a non-limitative example, said intrinsic coordinate system might be a spherical coordinate system, wherein a vertex of the first sub-part is given, as coordinates, a couple of angles, as a polar angle to the major axis and an azimuthal angle to the minor axis. In this example, the ventricle tissue is regarded as a surface, meaning that two coordinates are enough to locate a vertex of the first sub-part. For instance, a value of the polar angle set to 0° might indicate the apex of the left ventricle.

In another non-limitative example, said intrinsic coordinate system might be a cylindrical coordinate system, wherein the above-mentioned azimuthal angle is replaced with a scalar coordinate which indicates the height of the vertex along the major axis. As a variant, the scalar coordinate might be a normalized coordinate, which indicates a relative distance of a vertex to both the apex and the ventricle base. For instance, a value of the scalar coordinate set to 0 might indicate the apex of the left ventricle while a value set to 1 might indicate the ventricle base.

As a non-limitative example, said region of interest comprises points representing an outward surface of said ventricle tissue and other points representing an inward surface of said ventricle tissue. At least one coordinate of each point of said region of interest is a depth coordinate representing a distance of said point to the inward and the outward surfaces. In this example, the ventricle tissue is regarded as a wall with inward and outward surfaces, namely the endocardial surface and the epicardial surface, meaning that a third coordinate is required to locate a vertex of the first sub-part.

Said depth coordinate might be a normalized depth coordinate, where a value of 0 indicates that the vertex is located on the endocardial surface while a value of 1 indicates that the vertex is located on the epicardial surface.

Said depth coordinate of a point of said region of interest might be computed with determining a trajectory joining the inward surface to the outward surface and encompassing said point. Said trajectory might be a trajectory normal to one of the inward and the outward surfaces. As a variant, said trajectory can be determined as the orbits of a given vector field, said vector field might be oriented from the inward surface to the outward surface. For instance, said vector field may be defined as the gradient vector field of a scalar monotone function whose maximum is attained everywhere in the outward surface and whose minimum is attained everywhere in the inner surface. Consequently, the gradient of said function is a vector field pointing from the inward surface to the second outward surface.

In a second embodiment wherein said first anatomic part comprises a valve and/or a vessel and/or an apex, said 3D geometrical shape is all or part of a cylinder, whose base is located at said valve and/or vessel and/or apex, the base and the central curve of said cylinder defining the intrinsic coordinate system. According to this example, coordinates of each point of said region of interest are computed from the coordinates, in said intrinsic coordinate system, of the closest point of the cylinder. The cylinder might be a straight cylinder with a straight central curve, or a curved cylinder with a bent central curve.

This second embodiment is helpful to decompose a complex anatomic part, such as an atrium, in simpler sub-parts, since such anatomic part is generally provided with valve, vessel and/or apex. For instance, a left atrium is linked to four pulmonary veins and is provided with a mitral valve. It is thus possible to decompose the atrium in multiple curved cylinders, with four cylinders joining the inlets of adjacent pulmonary veins and a fifth central cylinder joining two of these cylinders. A last cylinder can be mapped on the remaining part of the atrium towards the mitral valve.

For instance:
a. a first set of vertices of the first sub-part, corresponding to a valve and/or a vessel and/or an apex might define a first base of the cylinder;
b. a second set of vertices of the first sub-part, corresponding to another valve and/or vessel and/or apex might define a second base of the cylinder;
c. and a curve which encompasses both centers of the first and second bases might define a central curve of the cylinder.

Thus, one of the bases and the central curve define the origin and the axes of the intrinsic coordinate system. The bases center and dimensions and the curviness of the central curve might be then determined with minimizing a distance metric of the cylinder surface with the vertices of the first sub-part.

In a non-limitative example, said intrinsic coordinate system might be a cylindrical coordinate system, wherein a vertex of the first sub-part is given, as coordinates, an azimuthal angle to the central curve and a scalar coordinate which indicates the height of the vertex along the central curve from a base. In this example, the anatomical part is regarded as a surface, meaning that two coordinates are enough to locate a vertex of the first sub-part.

As a variant, the scalar coordinate might be a normalized coordinate, which indicates a relative distance of a vertex to both cylinder bases.

According to an embodiment, at least one coordinate of each point of said region of interest represents, in said intrinsic coordinate system, a distance of said point to the position of at least one anatomic landmark and/or anatomic sub-part of said first anatomic part or of another predetermined anatomic part of said organ. Said distance might be normalized or not.

In an embodiment, the scale of said distance in said intrinsic coordinate system comprises at least one interval bound by a minimum value and a maximum value, a distance of a minimum value indicating a point located at a first anatomic landmark and/or a first anatomic sub-part of said first anatomic part or of another predetermined anatomic part of said organ and a distance of a maximum value indicating a point located at a second anatomic landmark and/or a second anatomic sub-part of said first anatomic part or of another predetermined anatomic part of said organ.

According to this embodiment, when said 3D anatomical model is segmented in at least a first sub-part representing a wall of the left ventricle and a second sub-part representing a wall of the right ventricle, said first and second sub-parts having a common septal wall, a dedicated intrinsic coordinate system can be determined for each sub-part, while a common coordinate is used for each intrinsic coordinate system. In other words, for a point of a region of interest, a specific coordinate indicating the height or the distance of the point to a base or to the apex of a ventricle, depending on which ventricle said point belongs and thus on which intrinsic coordinate system is concerned can be computed. However, another coordinate can indicate a radial position of the point on the ventricles walls, whatever the ventricle to which said point belongs.

For instance, said radial distance might be defined as ranging on a coordinate scale composed of three distant intervals, where a first interval defines a radial distance of the free wall of the left ventricle, a second interval defines a radial distance of the free wall of the right ventricle and a third interval defines a radial distance of the common septal wall. Thus, the value of the radial distance indicates both the radial position of a point and the wall to which said point belongs.

Since a ventricle section is not constant, the upper and lower boundaries of each interval might be dependent on the other coordinate indicating the height.

According to an embodiment, the method comprises, further to the combined 3D model generation step, a step of displaying on a display device said combined 3D model, wherein a visual feature of each vertex of said sub-part of said combined 3D model of said organ, corresponding to said first predetermined anatomic part, depends on the value and/or the classification labelling this vertex. Said visual feature might be a color of the vertex, for instance selected on a graduated color scale. It is thus possible for the cardiologist to visualize, on an anatomical 3D model of a patient's heart, the values and/or the classification of the region of interest.

The subject of the invention is also a computing device for the implementation of the method according to the invention, comprising a memory arranged to receive at least a first 3D image of a patient's organ and a first 3D anatomical model of said organ; and a computing unit arranged to implement at least the mapping of points generation step, the region of interest segmentation step, the intrinsic coordinate system determination step, the coordinates computing step and the combined 3D model generation step.
Figure 1 is a logic flow diagram that depicts a computer-implemented method, according to an embodiment of the invention;
Figure 2 shows a schematic representation of a 3D mapping of points representing a tissue of a patient's heart;
Figure 3 shows a schematic representation of a segmentation of different regions of interest in the 3D mapping of point of Figure 2;
Figure 4 shows a schematic representation of a 3D anatomical model of a heart;
Figure 5 shows a schematic representation of an intrinsic coordinate system determined from a sub-part of the 3D model of Figure 4 corresponding to a left ventricle;
Figure 6 shows a schematic representation of the computing of coordinates of the points of a segmented region of interest of the 3D mapping of points of Figure 2 in the intrinsic coordinate system of Figure 5;
Figure 7 shows a schematic representation of a 3D combined model of a heart;
Figure 8 shows a schematic representation of another intrinsic coordinate system determined from a sub-part of the 3D model of Figure 4 corresponding to left and right ventricles; and
Figure 9 shows a schematic representation of another intrinsic coordinate system determined from a sub-part of the 3D model of Figure 4 corresponding to a left atrium.

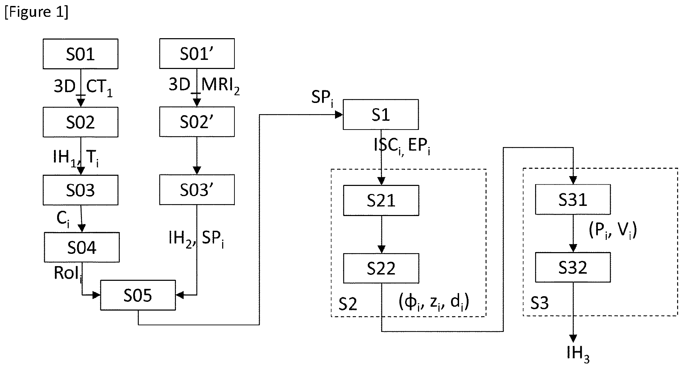

Reference is made to Figure 1 which shows a computer-implemented method for the generation of a combined representation of a 3D image of an organ and a 3D anatomical model of said organ. In the depicted example, the organ is a heart, although the method can be implemented for any kind of organ with no or slight modification.

In a preliminary step S01, a first 3D image 3D_CT₁ of the patient's heart has been acquired from a CT-scan method. Said method provides a plurality of 2D images each representing a slice of the heart, which are then combined to reconstruct the 3D image of the heart.

Any suitable imaging method can be used to replace the CT-scan method, as a SCT-scan method, a PET-scan method, a SPECT-scan method, a PCCT-scan method, a MRI-scan method or an electro-anatomical study acquired during an intracardiac catheter intervention.

In a second preliminary step S02, a 3D mapping of point IH₁ of the patient's heart is generated from the first 3D image 3D_CT₁. In the depicted embodiment, said 3D mapping of point is a 3D model of the heart IH₁, in which each vertex is associated to local features which are representative, directly, or indirectly and partly, or fully, of features of the organ, such as the presence or the absence of arrythmias in case of a heart. These local features might be physiological, geometrical, electrical and/or structural characteristic, resulting directly from computing on the mapping of points and/or from another data acquisition technique.

More precisely, an inner surface or layer and an outer surface or layer of the patient's heart myocardium have been modelized from the 3D image 3D_CT₁ with defining a plurality of vertices of meshes representing said surfaces. This modeling results in a mesh M of the inner surface or layer or of the outer surface or layer of the myocardium, wherein each vertex Pᵢ of the mesh M is therefore labelled with the value of the thickness Tᵢ of the myocardium, meaning the thickness computed from these inner and outer surfaces or layers, at the location of the heart corresponding to the position of this vertex.

In the depicted example, these vertices have been segmented, according to their thickness. Said mesh M comprises then a plurality of superimposed sub-meshes SMᵢ, with each sub-mesh corresponding to a thickness range of the myocardium.

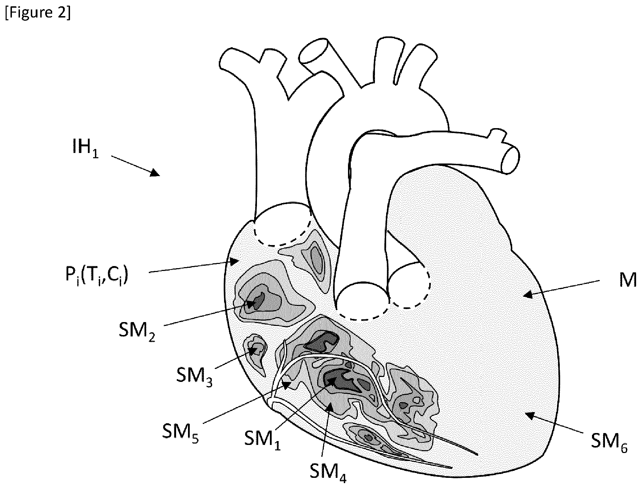

Reference is made to Figure 2 which shows an example of a 3D model IH₁. The model IH₁ comprises a mesh M comprising six superimposed thickness sub-meshes SM₁ to SM₆ corresponding each to a range of myocardium thickness, namely 5mm to 6mm, 4mm to 5mm, 3mm to 4mm, 2mm to 3mm, 1mm to 2mm, and 0 to 1mm. For description conciseness, regions of greater thickness have been depicted darker than regions of lower thickness.

Moreover, in a further preliminary step S03, each point of the first 3D image 3D_CT₁ has been associated to a numerical value in terms of Hounsfield units encoding the radiodensity at said point. Since calcification type cells, fat type cells and muscle type cells do not present a same radiodensity, it is therefore possible to discriminate, for a slice of the myocardium at a defined location of the heart, the proportion of calcification, fat and muscle type cells composing said slice. Each vertex Pᵢ of the mesh M has been therefore labelled with a class Cᵢ indicating the major type of cells composing the myocardium at the location of the heart corresponding to the position of this vertex.

In the depicted example, said class Cᵢ is selected among classes C₁ "calcification tissue", C₂ "fat tissue" and C₃ "muscle tissue".

While thickness Tᵢ of the myocardium and cells type classes Cᵢ define, for a vertex Pᵢ of the mesh M, two local characteristics of the heart at a location corresponding to said vertex Pᵢ, the invention is not limited to these local characteristics and only one or more than two local characteristics can be used to label a vertex Pᵢ.

For instance, a vertex Pᵢ can be labelled with a value of a local electrical feature, an activation time, an electric potential, or a conduction velocity, as value of a physiological feature, as a tissue density; or with a classification indicating whether the myocardium at vertex location has a cardiomyopathy scar or a myocardial fibrosis; or any other suitable local feature which might be used by a physician in the context of the present specification.

In a further preliminary step S04, the 3D model IH₁ is segmented into a plurality of regions of interest Rolᵢ, each corresponding to a predetermined anatomic part of the heart.

In the depicted embodiment, each region of interest Rolᵢ is automatically identified and segmented with one or more computer-implemented method. However, a part of a region of interest Rolᵢ might be manually identified by a cardiologist and then automatically segmented with one or more computer-implemented method.

Any suitable region of interest identification and segmentation method, based on image processing algorithm and/or machine learning algorithm, might be considered, and notably the following: a region growing method; an edge detection method; a model-based method; a pixel/voxel clustering method or a convolution neural network. Said method might be executed on the first 3D image 3D_CT₁ and/or on the 3D model IH₁.

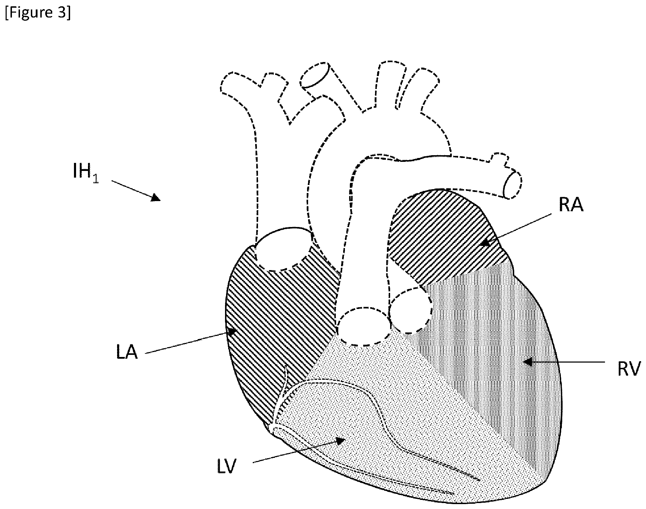

Reference is made to Figure 3 which shows an example of the 3D model IH₁ being segmented in four regions of interest RA, LA, LV, and RV, respectively corresponding to left and right atria and left and right ventricles. Other anatomical parts of the heart might be segmented from the model IH₁, as the septum, the valves, and the blood vessels. The segmentation might also be more accurate, with identifying and segmenting sub-parts of anatomical parts.

While the 3D model IH₁ carries precious local information, as the local myocardial thickness Ti and the local cell type classification Ci which can help a cardiologist to locate an infarct scar on the myocardium, the segmentation step S04 might be insufficiently accurate, depending on the first 3D image 3D_CT₁ acquisition method. The contrast agent location might not be optimal to segment all the anatomic parts of the heart, or the patient might have moved during the acquisition. Moreover, there might be a need to compare this 3D model IH1 with another 3D model of the patient's heart, built previously, or with a 3D model of another patient's heart, or with a standard heart 3D model.

To comply with this, another 3D model of a heart IHz is provided. Said 3D model IH₂ is an anatomical model, composed of a plurality of sub-parts SPᵢ which each represent a portion or the totality of an anatomical part of the heart.

In the depicted embodiment, the 3D anatomical model IH₂ is a 3D model of the same patient's organ, issued or computed from a second 3D image of the organ acquired according to a second imaging method, namely a MRI-scan. However, said 3D anatomical model IH₂ might be a 3D model of the same patient's organ, issued or computed from an image of the same patient's organ acquired according to the same imaging method then the first image 3D_CT₁, but at a different time; or a 3D model of a similar organ of another patient or a standard 3D model of said organ.

Symmetrically to steps S01 to S04, the method comprises a preliminary step S01' of acquiring a second 3D image 3D_MRI₂, from which a mapping of points is generated in a preliminary step S02'. Alternatively, the 3D image may be obtained from a recording medium on which it is stored, such as a local memory or a distant database, the 3D image having been acquired beforehand the method. In a segmenting step S03', each sub-parts SPᵢ are segmented from the mapping of points, to form the 3D anatomical model IH₂.

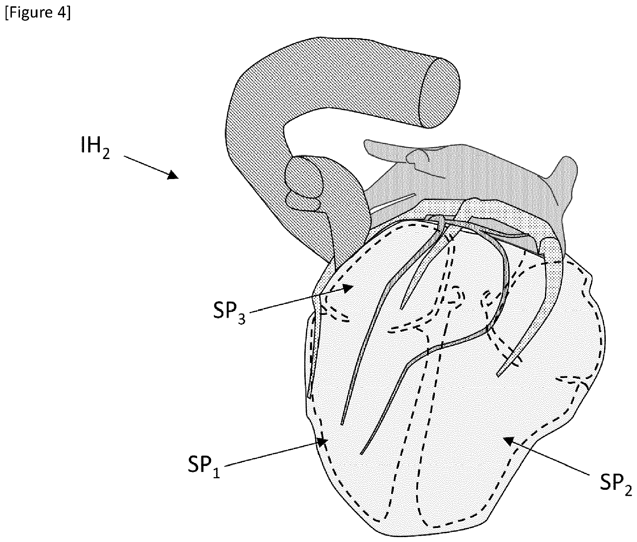

Reference is made to Figure 4 which shows an example of the 3D anatomical model of the heart IH₂, in which each atrium, each ventricle, each valve, and each blood vessel is represented with one or more dedicated meshes SPᵢ.

One can note that the steps S01 to S04 and S01' to S03' might be executed by another computing unit than the one used for the rest of the method. Moreover, these steps might be executed fully automatically by a computing unit or with a human assistance. The resulting 3D models IH₁ and IH₂ might be stored on a recording medium, such as a memory of the computer or an external memory support or a distant database through which it is accessible to the computer.

In a step 505, both 3D models IH₁ and IH₂ are provided to the computing unit of the computer to be eventually combined.

For conciseness, the further steps of the method according to invention that will now be described focus on the left ventricle, namely on the region of interest LV of the model IH₁ and on the sub-part SP₁, being said that these steps can be executed for any other anatomical part of the heart.

In a step S1, an intrinsic coordinate system ICS_{LV} of the left ventricle is determined from the sub-part SP₁, which represents the left ventricle, and namely from the geometrical shape of the left ventricle represented by this sub-part SP₁, from the position of anatomic landmarks and sub-parts of said ventricle, as the left ventricle mass center, its apex, and the mitral valve. The system ICS_{LV} is also determined from the sub-part SP₂ which represents the right ventricle, namely the position of anatomic landmarks of the right ventricle as its mass center.

To determine the parameters of the intrinsic coordinate system ICS_{LV}, equations of a computable 3D geometrical shape are determined to fit this shape on the sub-part SP₁.

Due to the shape of the heart ventricle tissue, said 3D geometrical shape is a part of an ellipsoid, whose center, major axis, and minor axis might be determined from vertices of sub-part SP₁ and SP₂.

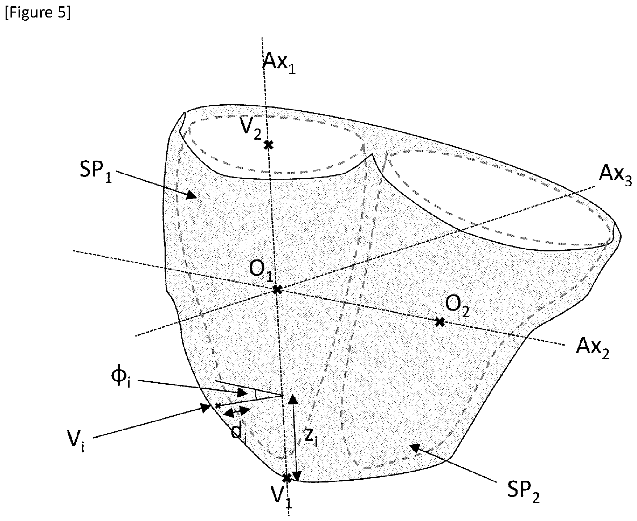

In the depicted embodiment, as shown on Figure 5, said center, and axes can be determined with the following:
a. a barycenter O₁ of vertices of the sub-part SP₁ is located. This barycenter O₁ defines the mass center of the left ventricle and the center of the ellipsoid,
b. vertices V₁ and V₂ of the sub-part SP₁, corresponding respectively to the apex of said left ventricle and to the center of the mitral valve, are located. These vertices define the major axis Ax₁ of the ellipsoid;
c. a barycenter O₂ of vertices of the sub-part SP₂ is located. This barycenter O defines the mass center of the right ventricle. The barycenter O₁ and O₂ define together the minor axis Ax₂ of the ellipsoid.

Thus, the center O₁, the major axis Ax₁ and the minor axis Ax₂ of the ellipsoid define respectively the origin and two axes of the intrinsic coordinate system ICS_{LV} of the left ventricle. A third axis Ax₃ can be determined as being orthogonal to these axes. The ellipsoid semi-axes lengths might be then determined with minimizing a distance metric of the ellipsoid surface with the vertices of the first sub-part SP₁ which belong to the endocardial surface of the left ventricle.

In other words, any vertex Vᵢ of the sub-part SP₁ can be then spatially located in the intrinsic coordinate system ICS_{LV} with a triple of coordinates (ϕᵢ, zᵢ, dᵢ) defined in respect with said intrinsic coordinate system ICS_{LV}.

In the depicted embodiment, the intrinsic coordinate system ICS_{LV} is a cylindrical coordinate system, where the first coordinate ϕᵢ is an angle between the vertex Vᵢ and the minor axis Ax₂, the second coordinate zᵢ is a scalar coordinate which indicates the height of the vertex Vᵢ along the major axis Ax₁ relative to the apex V₁, and where the third coordinate dᵢ is a depth coordinate indicating a distance of the vertex Vᵢ to the epicardial surface and to the endocardial surface.

As a variant, the coordinate zᵢ might be a normalized coordinate, which indicates a relative distance of a vertex to both the apex V₁ and the mitral valve center V₂. For instance, a value of the coordinate zᵢ set to 0 might indicate the apex of the left ventricle while a value set to 1 might indicate the ventricle base.

Said depth coordinate dᵢ is a normalized depth coordinate, where a value of 0 indicates that the vertex Vᵢ is located on the endocardial surface while a value of 1 indicates that the vertex Vᵢ is located on the epicardial surface.

In undepicted embodiment, the intrinsic coordinate system ICS_{LV} might be a spherical coordinate system, wherein a vertex Vᵢ can be located with a couple of angles to each of major axis Ax₁ and minor axis Ax₂, and a depth coordinate.

One can note that any other suitable computable 3D geometrical shape, whose equations is based on a center and axes, might be considered to define the intrinsic coordinate system of a sub-part of the 3D model IH₂. In other words, at least one of the origin, the axes, the coordinate types, the coordinate numbers, and the coordinate scales along each axis of said intrinsic coordinate system might be determined from the geometrical shape of an anatomic part and/or from the position of anatomic landmarks and/or anatomic sub-parts of this anatomic part. As non-limitative examples, said computable 3D geometrical shape might be a sphere, a cylinder, an ellipsoid, a paraboloid, a hyperboloid, or a cone.

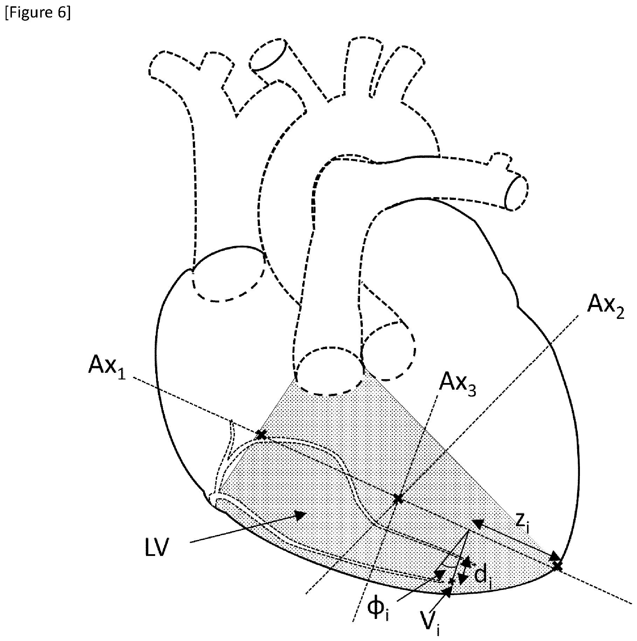

In a step S2, as shown on Figure 6, coordinates of each point Pᵢ of the region of interest LV are computed in the intrinsic coordinate system ICS_{LV}.

In a first sub-step S21, the center O₁, the major axis Ax₁ and the minor axis Ax₂ are defined for the region of interest LV following the same method of step S1, so as to fit an ellipsoid on the endocardial surface of the left ventricle.

In a second sub-step S22, a triple of coordinates (ϕᵢ, zᵢ, dᵢ) can be determined for any point Pᵢ of the region of interest LV, based on the center O₁, the axes Ax₁ and Ax₂ and the endocardial and epicardial surfaces.

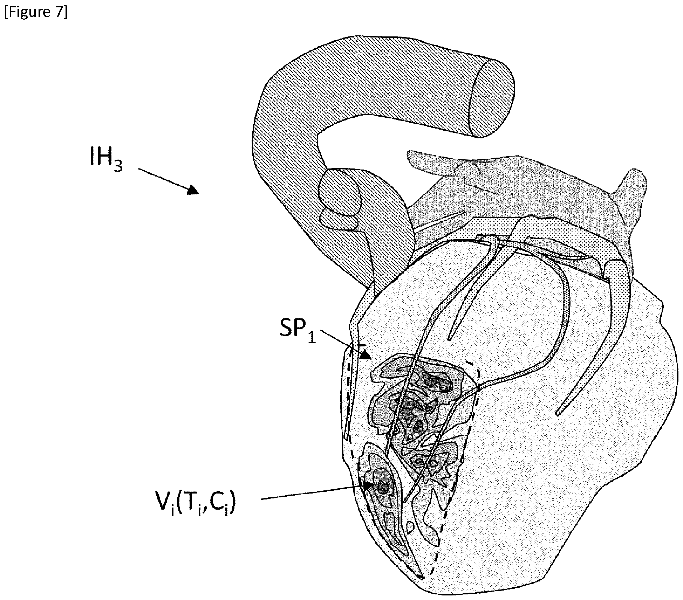

In a step S3, a combined 3D model IH₃ is then generated from the 3D models IH₁ and IHz. Reference is made to Figure 7, which shows an example of combined 3D model IH₃.

In a sub-step S31, a corresponding point Pᵢ of the region of interest LV is identified for each vertex Vᵢ of the sub-part SP₁ of the 3D anatomical model IH₂. More precisely, for each vertex Vᵢ, said corresponding point Pᵢ is the point whose triple of coordinates (ϕᵢ₁, zᵢ₁, dᵢ₁) in the intrinsic coordinate system ICS_{LV} is the closest to the triple of coordinates (ϕᵢ₂, zᵢ₂, dᵢ₂) of the vertex Vᵢ. The correspondence might be established based on an Euclidean distance.

In a sub-step S32, each vertex Vᵢ is then labelled with the thickness Tᵢ of the myocardium and cells type classes Cᵢ associated to its corresponding point Pᵢ.

As shown on Figure 7, the values of the thickness Tᵢ of the myocardium and the cells type classes Cᵢ of the points Pᵢ of the region of interest LV are therefore transposed to the sub-part SP₁ of the 3D anatomical model IH₂, to form the combined 3D model IH₃.

In an undepicted variant, the region of interest LV might be transformed, with interpolating the coordinates (ϕᵢ, zᵢ, dᵢ) of its points, in a mesh which can then be added to the 3D anatomical model IH₂.

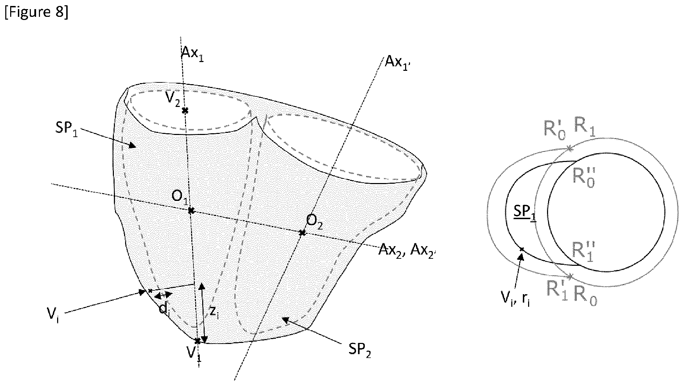

Reference is now made to Figure 8, which shows intrinsic coordinate systems ISC_{LV} and ISC_{RV} determined from the sub-part SP₁ and SP₂ of the anatomical 3D model IH2, respectively corresponding to left and right ventricles.

According to the invention, step S1 might be implemented, for each for each sub-part SPᵢ of the 3D anatomical model IH₂, to determine an intrinsic coordinate system ISCᵢ dedicated to each sub-part.

Following the above-mentioned method, a center O₁, and axes Ax₁ and Ax₂ are determined for the sub-part SP₁ and thus define the left ventricle coordinate system ISC_{LV}, while a center O₂, and axes Ax_{1'} and Ax_{2'} are determined for the sub-part SP₂ and thus define the right ventricle coordinate system ISC_{RV}. Due to their construction, axes Ax₂ and Ax_{2'} are a same axis.

As depicted in the left part of Figure 5, a vertex Vᵢ can be then located with a scalar coordinate zᵢ, which represents the height of the vertex Vᵢ along the major axis Ax₁ or Ax₂ relative to the right or left ventricle's apex, depending to which ventricle the vertex Vᵢ belongs. Said scalar coordinate zᵢ ranges on an interval which depends on the coordinate system, meaning that a same value for this coordinate zᵢ can locate a vertex a two different heights, upon which ventricle this vertex belongs.

However, and contrary to the first embodiment, the second coordinate is not an angle but a radial distance rᵢ, which ranges on a same coordinate scale with an identical meaning for each coordinate system ICS_{LV} and ICS_{RV}.

As shown on the right part of Figure 5, which shows a section of the sub-parts SP₁ and SP₂, said first and second sub-parts share a common wall, corresponding to the ventricle septum.

For a vertex Vᵢ, the radial distance rᵢ ranges on a coordinate scale composed of three distant intervals, where a first interval R₀ to R₁ defines a radial distance of the free wall of the left ventricle, a second interval R_{0'} to R_{1'} defines a radial distance of the free wall of the right ventricle and a third interval R_{0"} to R_{1"} defines a radial distance of the common septal wall.

A vertex Vᵢ which belongs to the left ventricle can therefore have a radial distance rᵢ which ranges on the first interval R₀ to R₁ or on the third interval R_{0"} to R_{1"}, while a vertex Vᵢ which belongs to the right ventricle can therefore have a radial distance rᵢ which ranges on the second interval R_{0'} to R_{1'} or on the third interval R_{0"} to R_{1'}.

Thus, the value of the radial distance rᵢ of a vertex Vᵢ indicates both the radial position of the vertex and the wall to which said vertex belongs.

Since a ventricle section is not constant, the upper and lower boundaries Ro, Ro,, R_{0"} and R1, R_{1'} and R_{1"} of each interval might be dependent on the scalar coordinate zᵢ indicating the height. These boundaries are selected to exclude overlapping of the intervals.

As a variant, the coordinate scale might be discontinuous, meaning that an excluded interval of coordinates along an axis cannot be attributed to any vertex of a sub-part, while intervals of coordinates preceding and following said excluded interval along the axis can be attributed to vertices of said first part.

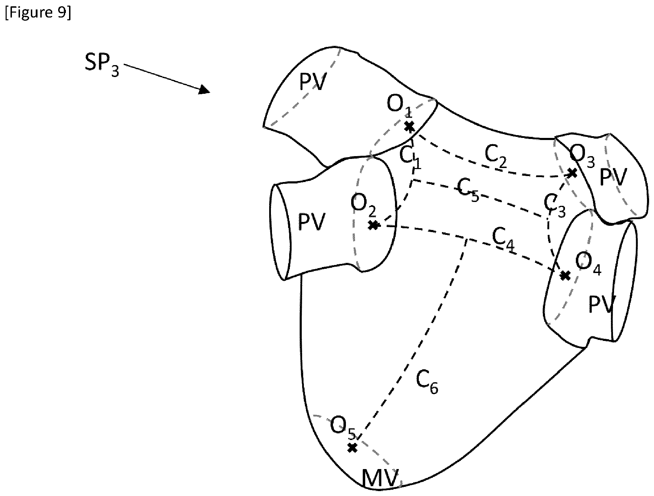

Reference is now made to Figure 9 which shows a schematic representation of a plurality of intrinsic coordinate systems which are determined from a same sub-part SP₃ of the 3D model IH₂, corresponding to a left atrium.

While the ventricles can be easily modelized with an ellipsoid, the shape of an atrium is more complex. To comply this complexity, step S1 can include a segmentation of a sub-part SPᵢ in predetermined elementary parts EPᵢ, an intrinsic coordinate system ICSᵢ being then determined for each elementary part. It is thus possible to address a complex geometry of an anatomical part, which makes a registration complex, with a combination of simple geometries.

As shown on Figure 9, the left atrium is linked to four pulmonary veins PV and is provided with a mitral valve MV. The segmentation sub-step of step S1 can then decompose the atrium in multiple curved cylinders, with four cylinders joining the inlets of adjacent pulmonary veins PV and a fifth central cylinder joining two of these cylinders. A last cylinder can be mapped on the base of the atrium towards the mitral valve MV.

For each of these cylinders, an intrinsic coordinate system ICSᵢ can be determined with the following:
a. a first set of vertices of this cylinder, corresponding to a vein inlet or to the mitral valve, defines a first base of the cylinder;
b. a second set of vertices of the cylinder, corresponding to another vein inlet or to the mitral valve, defines a second base of the cylinder;
c. and a curve which encompasses both centers of the first and second bases defines a central curve of the cylinder.

The bases center and dimensions and the curviness of the central curve might be then determined with minimizing a distance metric of the cylinder surface with the vertices of the atrium. Thus, one of the bases and the central curve Cᵢ define the origin Oᵢ and the axes Cᵢ of the intrinsic coordinate system of each cylinder.

Each vertex Vᵢ of the atrium can therefore be located, in one of these intrinsic coordinate systems ICSᵢ, with an azimuthal angle to the central curve Cᵢ, a scalar coordinate which indicates the height of the vertex along the central curve from the origin Oᵢ and a depth coordinate.

The methods disclosed herein may also be implemented by software programs executable by a computer system. Further, implementations may include distributed processing and parallel processing, especially for processing in parallel several or all data in the data sets.

The illustrations described herein are intended to provide a general understanding of the structure of various embodiments. These illustrations are not intended to serve as a complete description of all the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive, and the appended claims are intended to cover all such modifications, enhancements, and other embodiments, which fall within the true spirit and scope of the description. Thus, the scope of the following claims is to be determined by the broadest permissible interpretation of the claims and their equivalents and shall not be restricted or limited by the foregoing description.

## Claims

1. A computer-implemented method for the generation of a combined representation of a 3D image of an organ and a 3D anatomical model of said organ, the method comprising:
a. (501, S01', S02', S03') Step of receiving at least a first 3D image (3D_CT₁) of a patient' s organ and at least a first 3D anatomical model (IH₂) of said organ, wherein said first 3D anatomical model is segmented in sub-parts (SPᵢ) each representing at least a portion of a predetermined anatomical part of said organ;
b. (S02, S03, S04) Generating, from said first 3D image (3D_CT₁), a mapping of points (IH₁) representing said organ and segmenting, from said mapping of points, a region of interest (LV) corresponding to a first predetermined anatomic part, wherein each point (Pᵢ) of said region of interest is associated with at least a value (Tᵢ) of at least one parameter and/or a classification (Cᵢ) indicating a local characteristic of said organ at or around said point position;
c. (S1) Determining an intrinsic coordinate system (ICS_{LV}) of at least a first sub-part (SP₁) of said first 3D anatomical model (IH₂) of said organ which corresponds to said first predetermined anatomic part and which depends on said first anatomic part;
d. (S2) Computing, at least for each point (Pᵢ) of said region of interest (LV) of said mapping of points (IH₁), coordinates (ϕᵢ, zᵢ, dᵢ) of this point in said intrinsic coordinate system;
e. (S3) Generating, from said first 3D image (3D_CT₁) and from said first 3D anatomical model (IH₂), a combined 3D model (IH₃) of said organ, wherein at least a sub-part (SP₁) of said combined 3D model of said organ, corresponding to said first predetermined anatomic part, is labelled with the values and/or the classifications (Tᵢ, Cᵢ) associated to the points (Pᵢ) of said region of interest, which are identified from their coordinates (ϕᵢ, zᵢ, dᵢ) in said intrinsic coordinate system (ICS_{LV}).

2. The method according to claim 1, wherein said combined 3D model generation step (S3) comprises the association, to each vertex (Vᵢ) of the first sub-part (SP₁) of the first 3D anatomical model (IH₂), of the value and/or the classification (Tᵢ, Cᵢ) associated with a point (Pᵢ) of said region of interest (LV) whose coordinates (ϕᵢ, zᵢ, dᵢ) in said intrinsic coordinate system (ICS_{LV}) correspond to the coordinates of said vertex in said intrinsic coordinate system, said first 3D model associated to said values forming said combined 3D model (IH₃).

3. The method according to claim 1, wherein said combined 3D model generation step (S3) comprises the generation, from said points (Pᵢ) of said region of interest (LV), of a second 3D model representing said first predetermined anatomic part, said first (IH₂) and second 3D models being combined to generate said combined 3D model (IH₃).

4. The method according to claim 1, wherein said segmentation step (S04) comprises the segmentation of said mapping of points (IH₁) into different regions of interest (Rolᵢ), each corresponding to at least a portion of a predetermined anatomical part of said organ; the method comprising, for each sub-part (SPᵢ) of said first 3D anatomical model (IH₂) of said organ to which corresponds one of said portions, a step of determining an intrinsic coordinate system (ICSᵢ) of said sub-part which depends on said corresponding portion.

5. The method according to one of the previous claims, wherein said intrinsic coordinate system (ICS_{LV}) is determined from the geometrical shape of said first anatomic part and/or from the position of anatomic landmarks (O₁, V₁, V₂) and/or anatomic sub-parts of said first anatomic part.

6. The method according to claim 5, wherein said intrinsic coordinate system (ICS_{LV}) is determined from the position of anatomic landmarks (O₂) and/or anatomic sub-parts of another predetermined anatomic part of said organ.

7. The method according to one of the claims 5 or 6, wherein said intrinsic coordinate system determination step (S1) comprises the determination a computable 3D geometrical shape which minimizes a distance metric with said first sub-part (SP₁) of said first 3D anatomical model (IH₂), said intrinsic coordinate system being based said 3D geometrical shape in said intrinsic coordinate system.

8. The method according to the previous claim, wherein said first anatomic part is a heart ventricle tissue, wherein said 3D geometrical shape is all or part of an ellipsoid, whose major axis (Ax₁) encompasses both a vertex (V₁) of the first sub-part (SP₁) corresponding to the apex of said ventricle and a vertex (V₂) of the first sub-part corresponding to a centre of a valve or a flow tract of said ventricle, said axis defining an axis of the intrinsic coordinate system (ICS_{LV}) and wherein coordinates (ϕᵢ, zᵢ, dᵢ) of each point (Pᵢ) of said region of interest (LV) are computed from the coordinates, in said intrinsic coordinate system, of the closest point of the ellipsoid.

9. The method according to the previous claim, wherein said region of interest (LV) comprises points (Pᵢ) representing an outward surface of said ventricle tissue and other points (Pᵢ) representing an inward surface of said ventricle tissue, and wherein at least one coordinate (dᵢ) of each point (Pᵢ) of said region of interest is a depth coordinate representing a distance of said point to the inward and the outward surfaces.

10. The method according to the claim 7, wherein said first anatomic part comprises a valve and/or a vessel and/or an apex, wherein said 3D geometrical shape is all or part of a cylinder, whose base is located at said valve and/or vessel and/or apex, the base and the central curve (Cᵢ) of said cylinder defining the intrinsic coordinate system (ICSᵢ) and wherein coordinates of each point (Pᵢ) of said region of interest (Rolᵢ) are computed from the coordinates, in said intrinsic coordinate system, of the closest point of the cylinder.

11. The method according to one of the claims 5 to 10, wherein at least one coordinate (rᵢ) of each point (Pᵢ) of said region of interest (LV, RV) represents, in said intrinsic coordinate system (ICS_{LV}, ICS_{RV}), a distance of said point to the position of at least one anatomic landmark and/or anatomic sub-part of said first anatomic part or of another predetermined anatomic part of said organ.

12. The method according to claim 11, wherein the scale of said distance in said intrinsic coordinate system (ICS_{LV}, ICS_{RV}) comprises at least one interval (R₀-R₁, R_{0'}-R_{1'}, R_{0"}-R_{1"}) bound by a minimum value (R₀, R_{0'}, R_{0"}) and a maximum value (R₁, R_{1'}, R_{1"}), a distance of a minimum value indicating a point located at a first anatomic landmark and/or a first anatomic sub-part of said first anatomic part or of another predetermined anatomic part of said organ and a distance of a maximum value indicating a point located at a second anatomic landmark and/or a second anatomic sub-part of said first anatomic part or of another predetermined anatomic part of said organ.

13. A computing device for the implementation of the method according to one of claims 1 to 12, comprising a memory arranged to receive at least a first 3D image (3D_CT₁) of a patient's organ and a first 3D anatomical model (IH₂) of said organ; and a computing unit arranged to implement at least the mapping of points generation step (S02, S03), the region of interest segmentation step (S04), the intrinsic coordinate system determination step (S1), the coordinates computing step (S2) and the combined 3D model generation step (S3).
